# EUROPÄISCHE PATENTSCHRIFT

(11) **EP 1 850 195 B1**
(45) Veröffentlichungstag und Bekanntmachung des Hinweises auf die Patenterteilung: **30.12.2009**
(21) Anmeldenummer: 06008527.1
(22) Anmeldetag: 25.04.2006
(51) Int. Cl.: G05B 19/042, G05B 19/05

(54) **Verfahren und Vorrichtung zum Testen eines Motorsteuergeräts sowie hierfür geeignetes Motorsteuergerät**
Method and device for testing a vehicle control unit and suited vehicle control unit
Procédé et dispositif pour tester un commande de moteur et dispositif de commande de moteur adapté

(43) Veröffentlichungstag der Anmeldung: 31.10.2007
(73) Patentinhaber: Continental Automotive GmbH, 30165 Hannover (DE)
(72) Erfinder: Mantel, Wolfgang, 93051 Regensburg (DE)

(56) Entgegenhaltungen:
- WO-A-02/37399
- WO-A2-2006/035038
- US-A- 5 978 436
- US-A- 6 002 992
- US-B1- 6 914 914

## Beschreibung

Die vorliegende Erfindung betrifft den Test von Funktionen eines Steuergeräts für eine Brennkraftmaschine, insbesondere eines Steuergeräts für die Brennkraftmaschine eines Kraftfahrzeugs, nachfolgend auch kurz als "Motorsteuergerät" bezeichnet.

In den letzten Jahren hat die Komplexität derartiger Steuergeräte stetig zugenommen, so dass diese Geräte heutzutage üblicherweise als programmgesteuerte elektronische Einrichtungen ausgebildet sind, in welchen eine Vielzahl von Steuergerätfunktionen durch programmierte Algorithmen, teilweise in Kombination mit dedizierten Hardwarekomponenten, implementiert werden.

In der realen Betriebsumgebung ist ein Motorsteuergerät über geeignete Schnittstellen mit elektrischen und/oder elektronischen Komponenten der betreffenden Brennkraftmaschine verbunden. Bei einer fremdgezündeten Brennkraftmaschine errechnet das Motorsteuergerät beispielsweise zur Ansteuerung einer Zündanlage geeignete Zündzeitpunkte. Bei einer Brennkraftmaschine mit Kraftstoffeinspritzung errechnet das Motorsteuergerät zur Ansteuerung einer Einspritzanlage geeignete Einspritzungsvorgaben wie Einspritzzeitpunkte und einzuspritzende Kraftstoffmengen.

In modernen Kraftfahrzeugen erfüllt das Motorsteuergerät oftmals auch Steuerungsfunktionen betreffend andere Fahrzeugkomponenten, wie z. B. die Steuerung eines automatischen Getriebes oder die Steuerung einer Bremsanlage. Alternativ oder zusätzlich kommunizieren derartige Motorsteuergeräte über einen Kommunikationsbus mit eigens zur Steuerung anderer Fahrzeugkomponenten vorgesehenen Steuergeräten.

Aus der DE 103 03 489 A1 ist ein Verfahren und eine Vorrichtung zum Testen von Software einer Steuereinheit eines Fahrzeugs bekannt. Gemäß dieses Stands der Technik wird die Steuereinheit mit einem Testsystem verbunden, welches eine reale Betriebsumgebung des Steuergeräts wenigstens teilweise simuliert, wodurch sehr aufwendige Tests am Fahrzeug selbst vermieden werden.

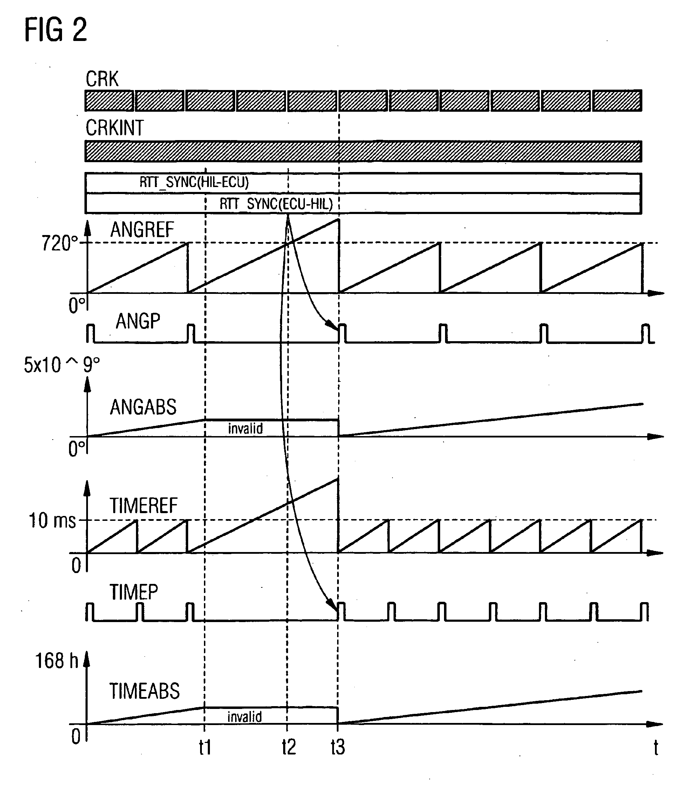

Die Veröffentlichung beschäftigt sich mit der Problematik des Aufwands und der Kosten zur Bereitstellung des Testsystems, ohne im Detail darauf einzugehen, welche Art von Software bzw. welche Funktionen der Steuereinheit getestet werden sollen. Sowohl der in dieser Veröffentlichung mit Bezug auf die dortige Figur 2 beschriebene technische Ausgangspunkt als auch die mit Bezug auf die dortige Figur 3 beschriebene Verbesserung stoßen jedoch in der Praxis auf ihre Grenzen, wenn es um den Test von Motorsteuerungsfunktionen (z. B. Zündung und Kraftstoffeinspritzung) mit hoher zeitlicher Auflösung geht (z. B. in der Größenordnung von 100 ns).

Der Begriff "zeitliche Auflösung" bezieht sich hierbei sowohl auf die gezielte zeitliche Festlegung irgendeines vom Testsystem simulierten Ereignisses bezüglich einer so genannten "Zeit- und Winkelbasis" des Steuergeräts als auch auf die präzise Kenntnis der Zeitpunkte von Steuergerätreaktionen bezüglich dieser Zeit- und Winkelbasis.

Der Begriff "Zeit- und Winkelbasis" bezeichnet hierbei ein motorsteuergerätinternes Zeitsignal (repräsentativ für die Zeit) und ein motorsteuergerätinternes Kurbelwinkelsignal (repräsentativ für den Kurbelwinkel der betreffenden Brennkraftmaschine), auf Basis derer das Steuergerät seine Funktionen durchführt.

Die Verwendung einer Winkelbasis (ein oder mehrere Kurbelwinkelsignale) in einem Motorsteuergerät kann z. B. bei der Berechnung eines geeignetes Zündzeitpunkts eine Rolle spielen, etwa wenn die Zündung bei einer bestimmten (zumeist drehzahlabhängigen) Winkelstellung der Kurbelwelle erfolgen soll. In diesem Beispiel kann dann die Zeitbasis (ein oder mehrere Zeitsignale) z. B. relevant für die Berechnung des Ladebeginnzeitpunkts für eine Zündspule sein.

Die für den Betrieb des Motorsteuergeräts erforderliche Zeitbasis ist gewissermaßen eine "sehr präzise im Motorsteuergerät laufende Uhr", wohingegen die Winkelbasis eine "präzise Winkelanzeigeeinrichtung betreffend die aktuelle Kurbelwellenstellung" darstellt.

Bei modernen Motorsteuergeräten mit einer digital dargestellten Zeit- und Winkelbasis liegt die Zeitauflösung typischerweise in der Größenordnung von einigen 100 ns und die Winkelauflösung typischerweise in der Größenordnung einiger 1/100 Grad.

Die bekannten Verfahren und Vorrichtungen zum Testen von Steuergerätfunktionen gestatten keine automatisierten Echtzeittests für Motorsteuerungsfunktionen mit Aussagekraft auf derartig hochaufgelösten Zeit- bzw. Winkelbasen.

Es ist daher eine Aufgabe der vorliegenden Erfindung, die Aussagekraft von Echtzeittests von Steuergerätfunktionen im Hinblick auf die Zeit- und Winkelbasis zu erhöhen.

Diese Aufgabe wird gelöst durch ein Verfahren nach Anspruch 1 bzw. ein Testsystem nach Anspruch 6. Die für das erfindungsgemäße Verfahren in den abhängigen Ansprüchen formulierten Weiterbildungen können in entsprechender Weise bei dem erfindungsgemäßen Testsystem realisiert werden.

Zur Bildung des Oberbegriffs der Ansprüche 1 bzw. 6 wurde die US 6,002,992 heraugezogen.

Bei dem erfindungsgemäßen Verfahren wird ein Testsystem verwendet, welches eine reale Betriebsumgebung des Steuergeräts wenigstens teilweise simuliert und hierbei dem Steuergerät ein simuliertes Kurbelwellensignal bereitstellt, wobei das Testsystem ein Zeitsignal sowie ein Kurbelwinkelsignal erzeugt, welche bei der Durchführung der zu testenden Funktion vom Steuergerät genutzt werden. Mit anderen Worten sieht die Erfindung für das Testsystem und das zu testende Steuergerät eine gemeinsame Zeit- und Winkelbasis vor. Damit werden automatisierte Echtzeittests für Motorsteuerungsfunktionen mit hoher Aussagekraft ermöglicht. Insbesondere können Testszenarien bzw. auslösende Ereignisse für bestimmte Steuerfunktionen mit hoher zeitlicher Genauigkeit festgelegt werden. Die sodann von der Steuerfunktion generierten Pulsmuster, Steuersignale etc. sind auf Grund der gemeinsamen Zeit- und Winkelbasis mit den auslösenden Ereignissen korrelierbar.

Ausführungsformen der Erfindung sind in den Ansprüchen 2-5 definiert.

Die Erfindung wird nachfolgend anhand eines Ausführungsbeispiels mit Bezug auf die beigefügten Zeichnungen weiter beschrieben. Es stellen dar:
- Fig. 1: ein Blockschaltbild zur Veranschaulichung eines Verfahrens zum Testen von Funktionen eines Motorsteuergeräts, und
- Fig. 2: ein Zeitverlaufsdiagramm zur Erläuterung der Synchronisation einer Zeit- und Winkelbasis.

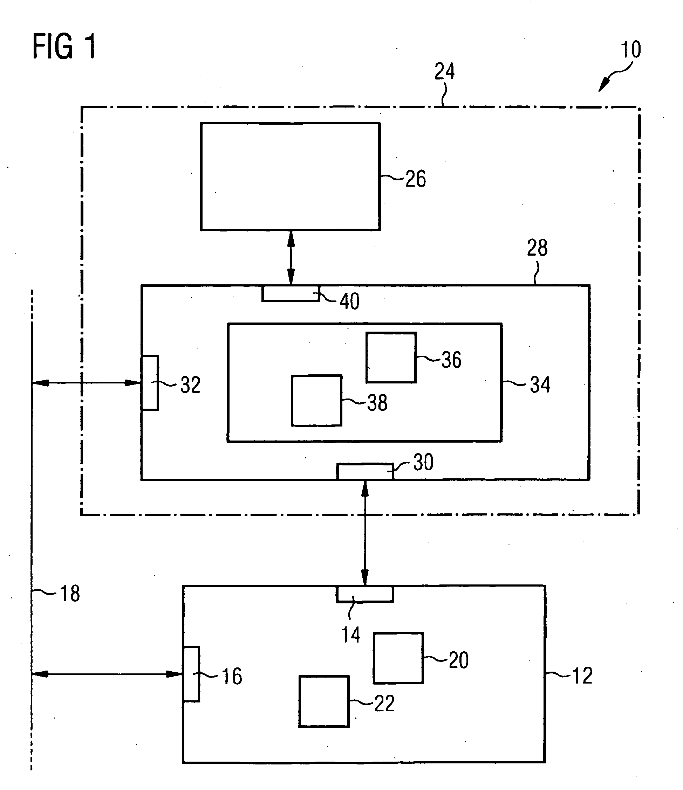

Fig. 1 zeigt eine insgesamt mit 10 bezeichnete Vorrichtung zum Testen einzelner Funktionen eines Steuergeräts 12 für eine Brennkraftmaschine eines Kraftfahrzeugs.

In eine realen Betriebsumgebung steht das Steuergerät 12 über eine Schnittstellenanordnung 14 mit elektrischen und elektronischen Fahrzeugkomponenten in Verbindung, die sich grob in Aktoren und Sensoren einteilen lassen. Aktoren, wie z. B. Kraftstoffinjektoren bzw. Endstufen hierfür etc., werden in programmgesteuerter Weise vom Steuergerät 12 angesteuert, wohingegen Sensoren, wie z. B. ein Drehwinkelkodierer an der Kurbelwelle etc., Signale für das Steuergerät 12 bereitstellen, welche in den Algorithmen zur Durchführung der Steuerungsfunktionen benötigt werden.

Ferner umfasst das Steuergerät 12 eine Schnittstelle 16 zu einem Kommunikationsbus 18, der im dargestellten Ausführungsbeispiel als CAN-Bus ausgebildet ist. Dieser Bus 18 dient in der realen Betriebsumgebung zur Kommunikation zwischen einer Vielzahl von Fahrzeugkomponenten. Beispielsweise können über diesen Bus 18 Botschaften zwischen dem Motorsteuergerät 12 einerseits und Aktoren, Sensoren oder anderen elektronischen Einrichtungen (z. B. Bordcomputer) andererseits übertragen werden.

Neben den Schnittstellen 14, 16 sind in Fig. 1 von den weiteren Steuergerätkomponenten lediglich noch eine zentrale Recheneinheit (CPU) 20 sowie eine Speichereinrichtung 22 symbolisiert, in welcher Informationen über die aktuelle Zeit und die aktuelle Winkelstellung der Kurbelwelle gespeichert und fortlaufend aktualisiert werden. Diese Informationen, hier auch als Zeit- und Winkelbasis bezeichnet, liegen in unten noch detailliert beschriebener Form als mehrere Digitalsignale vor und sind von der zentralen Recheneinheit 20 bei der Durchführung von Steuergerätfunktionen nutzbar.

In der Situation, die in Fig. 1 dargestellt ist, befindet sich das Steuergerät 12 nicht in einer realen Betriebsumgebung sondern in einer Testumgebung, die für einzelne, in automatisierter Weise zu testenden Steuergerätfunktionen geeignet vorgegeben wird. Zu diesem Zweck ist ein Testsystem 24 vorgesehen, welches im dargestellten Beispiel aus einem Testautomatisierungsrechner 26 (z. B. PC) und einer Testautomatisierungshardware 28 besteht.

Die Hardware 28 steht über eine Schnittstellenanordnung 30 mit der Schnittstellenanordnung 14 des Steuergeräts 12 und über eine Schnittstelle 32 mit dem Kommunikationsbus 18 in Verbindung und simuliert wenigstens teilweise eine reale Betriebsumgebung für das Steuergerät 12. Die Hardware 28 umfasst hierzu einen Simulationsrechner 34 und (nicht dargestellte) dedizierte Hardwarekomponenten zur Simulation einzelner Fahrzeugkomponenten (z. B. Aktoren und Sensoren).

Die zur Simulation erforderlichen Berechnungen werden im Simulationsrechner 34 von einer zentralen Recheneinheit 36 bewerkstelligt. Der Simulationsrechner 34 erzeugt, verwendet und aktualisiert hierbei sehr präzise (realistisch) eine Zeit- und Winkelbasis, deren aktuelle Werte in einer Speichereinrichtung 38 des Simulationsrechners 34 abgelegt sind. Aus dieser Zeit- und Winkelbasis wird ein die Drehung der Kurbelwelle repräsentierendes Zahnsignal erzeugt und dann wie in einer realen Betriebsumgebung über die Schnittstellenanordnung 14 dem Steuergerät 12 bereitgestellt.

Um einen automatisierten Testablauf zu vereinfachen und in einfacher Weise variieren zu können, ist im dargestellten Beispiel der über eine weitere Schnittstelle 40 mit der Hardware 28 verbundene Testautomatisierungsrechner 26 vorgesehen, auf welchem ein in komfortabler Weise programmierbares Testablaufprogramm gespeichert werden kann und bei der Durchführung des Testverfahrens abläuft.

Mit der beschriebenen Testanordnung können das Steuergerät 12 oder einzelne Funktionen dieses Steuergeräts umfangreichen Tests unterzogen werden, was beispielsweise im Rahmen einer Erprobung von geänderten Hardware- und/oder Softwarekomponenten des Steuergeräts 12 von großem Nutzen ist.

Eine Besonderheit der Testanordnung besteht darin, dass damit insbesondere automatisierte Echtzeittests für einzelne Motorsteuerungsfunktionen (Blackboxtest) mit hoher zeitlicher Auflösung möglich sind. Dies deshalb, weil zu Beginn eines Testablaufs die Zeit- und Winkelbasen des Testsystems 24 und des Steuergeräts 12 synchronisiert werden. Die hierfür durchgeführte Synchronisierungsprozedur wird nachfolgend beispielhaft mit Bezug auf Fig. 2 beschrieben.

Fig. 2 veranschaulicht die beim Testablauf erfolgende Schaffung einer Zeit- und Winkelbasis im Steuergerät 12, die identisch zu derjenigen der Testautomatisierungshardware 28 ist. Die Figur zeigt bezüglich der Zeit t aufgetragene Verläufe von verschiedenen Signalen.

Die Hardware 28 simuliert ein Kurbelwellensignal CRK, wie es in der Realität als so genanntes Zahnsignal von einem Drehwinkelkodierer an einer Kurbelwelle einer Brennkraftmaschine erzeugt würde. Für eine volle 360°-Umdrehung der Kurbelwelle werden 58 aufeinander folgende Pulse und zwei aufeinander folgende Pulspausen ausgegeben, wobei die Abstände benachbarter Pulse bzw. Pulspausen jeweils einer Kurbelwellendrehung von 6° (= 360°/60) entsprechen. Die Anordnung von Pulspausen im Signal CRK ist in Fig. 2 deutlich zu erkennen und in der Praxis ein geeignetes Mittel zur Kodierung der Drehwinkelstellung bezüglich eines "Winkelnullpunkts" (z. B. bezüglich eines oberen oder unteren Totpunkts der Kolbenstellung).

Durch eine Interpolation des Kurbelwellensignals CRK wird außerdem ein interpoliertes Kurbelwellensignal CRKINT mit einer um den Faktor 256 erhöhten Auflösung erzeugt. Dementsprechend besteht dieses Signal CRKINT aus Pulsen, deren Abstände jeweils einer Kurbelwellendrehung von 6°/256 entsprechen.

Das interpolierte Kurbelwellensignal CRKINT wird einem ersten Zähler eingegeben, der daraus ein Winkelsignal ANGREF erzeugt, dessen Wert repräsentativ für den Kurbelwinkel innerhalb eines 720°-Intervalls ist, welches im dargestellten Beispiel (eines Viertaktmotors) den relevanten Verbrennungszyklus darstellt. Die winkelperiodische Rücksetzung (nach jeweils 720°) wird durch ein Winkelsignal ANGREF erzwungen, welches in der Figur ebenfalls dargestellt ist und basierend auf dem Signal CRK bei jedem zweiten Auftreten der Pulspausen in diesem Signal CRK erzeugt wird.

Das Winkelsignal ANGP besteht aus einer Folge von Pulsen, die jeweils eine absteigende Flanke des Signals ANGREF (durch Rücksetzung des ersten Zählers) bewirken.

Das interpolierte Kurbelwellensignal CRKINT wird außerdem einem zweiten Zähler eingegeben, der daraus ein absolutes bzw. kumuliertes Winkelsignal ANGABS erzeugt.

Die Winkelsignale ANGREF, ANGP, ANGABS bilden zusammen einen Winkelanteil der Zeit- und Winkelbasen, die gleichermaßen sowohl in der Testautomatisierungshardware 28 als auch im Steuergerät 12 erzeugt werden. Während jeweiliger, in diesen beiden Einrichtungen ablaufender Initialisierungsprozeduren ist jedoch nicht gewährleistet, dass die zeitlichen Verläufe dieser Signale identisch sind. Durch eine nachfolgend beschriebene Synchronisierungsprozedur wird dies jedoch erreicht.

Ein anderer Anteil der Zeit- und Winkelbasen wird von den nachfolgend beschriebenen Zeitsignalen TIMEREF, TIMEP, TIMEABS gebildet.

Das Zeitsignal TIMEREF wird am Ausgang eines mit einem periodischen Taktsignal beaufschlagten Zählers gebildet, der im dargestellten Ausführungsbeispiel periodisch alle 10 ms durch ein Zeitsignal TIMEP zurückgesetzt wird. Im Steuergerät kann dieses Taktsignal z. B. identisch mit einem zur Taktung einer CPU verwendeten Signal (oder daraus abgeleitet) sein. Das Zeitsignal TIMEP kann beispielsweise durch Teilung des genannten Taktsignals erzeugt werden.

Das Zeitsignal TIMEP besteht aus einer Folge von Pulsen, die jeweils eine absteigende Flanke im Signal TIMEREF bewirken.

Ferner wird das periodische Taktsignal einem weiteren Zähler eingegeben, um daraus das absolute bzw. kumulierte Zeitsignal TIMEABS zu bilden.

Die Synchronisierung der Zeit- und Winkelbasen einerseits der Hardware 28 und andererseits des Steuergeräts 12 wird wie folgt bewerkstelligt:

Zu Beginn des Testablaufs übermittelt die Testautomatisierungshardware 28 über den Kommunikationsbus 18 einen Synchronisierungsbefehl (CAN-Botschaft) an das Steuergerät 12.

Diese Übermittlung ist in Fig. 2 zu einem Zeitpunkt t1 eingezeichnet. Ab diesem Zeitpunkt unterbrechen die Hardware 28 und das Steuergerät 12 die Erzeugung von Pulsen in den Signalen ANGP und TIMEP.

Der Synchronisierungsbefehl wird zu einem Zeitpunkt t2 durch eine vom Steuergerät 12 über den Kommunikationsbus 18 zurück zur Hardware 28 übermittelte Bestätigungsbotschaft bestätigt.

Der diesem Zeitpunkt t2 folgende nächste Rücksetzpuls im Signal ANGP bewirkt eine Zurücksetzung der beiden Winkelzähler, welche die Signale ANGREF und ANGABS erzeugen, und definiert somit den Beginn der gemeinsamen Winkelbasis.

Außerdem werden durch diesen Rücksetzpuls im Signal ANGP auch die beiden Zeitzähler zurückgesetzt, welche die Signale TIMEREF und TIMEABS erzeugen. Der Beginn des gemeinsamen Verlaufs der Winkelbasis wird somit auch zur Synchronisierung der Zeitbasis herangezogen.

Ab dem in Fig. 2 eingezeichneten Zeitpunkt t3 liegt somit eine gemeinsame Zeit- und Winkelbasis für das Testsystem 24 und das getestete Steuergerät 12 vor. Diese gemeinsame Basis ermöglicht wie oben bereits erläutert die Durchführung von Funktionstests mit hoher zeitlicher Auflösung und damit gegenüber den bekannten Testverfahren wesentlich vergrößerter Aussagekraft.

Die erwähnten Zähler (für Zeit bzw. Winkel) können jeweils durch Hardware und/oder Software realisiert sein.

## Patentansprüche

1. Verfahren zum Testen von Funktionen eines Motorsteuergeräts (12) für eine Brennkraftmaschine mittels eines an das Steuergerät (12) angeschlossenen Testsystems (24),
wobei in dem Testsystem (24) eine testsysteminterne Zeit-und-Winkel-Basis erzeugt und eine reale Betriebsumgebung des Steuergeräts (12) wenigstens teilweise simuliert wird,
wobei im Rahmen der Simulation dem Steuergerät (12) ein von dem Testsystem (24) simuliertes Kurbelwellensignal (CRK) bereitstellt wird, aus welchem das Steuergerät (12) eine steuergerätinterne Zeit-und-Winkel-Basis erzeugt,
**dadurch gekennzeichnet,**
**dass** mittels des Testsystems (24) ein Zeitsignal (TIMEREF, TIMEABS) sowie ein Kurbelwinkelsignal (ANGREF, ANGABS) erzeugt und dem Steuergerät (12) bereitgestellt werden, welche der testsysteminternen Zeit-und-Winkel-Basis entsprechen, und
**dass** das Zeitsignal (TIMEREF, TIMEABS) und das Kurbelwinkelsignal (ANGREF, ANGABS) vom Steuergerät (12) genutzt werden, um bei der Durchführung einer zu testenden Funktion eine gemeinsame Zeit-und-Winkel-Basis einerseits des Testsystems (24) und andererseits des Steuergeräts (12) sicherzustellen.

2. Verfahren nach Anspruch 1, wobei vor einem Test einer Funktion eine Synchronisierung der steuergerätinternen Zeit- und Winkelbasis mit der testsysteminternen Zeit-und-Winkel-Basis (Speichereinrichtung 38) erfolgt.

3. Verfahren nach Anspruch 2, wobei die Synchronisierung durch einen vom Testsystem (24) zum Steuergerät (12) ausgegebenen Synchronisierungsbefehl ausgelöst wird.

4. Verfahren nach Anspruch 2 oder 3, wobei für die Synchronisierung der beiden Zeit-und-Winkel-Basen
- ein steuergerätinternes, bei der Durchführung der zu testenden Funktion vom Steuergerät (12) genutztes Zeitsignal (TIMEREF, TIMEABS) mit dem vom Testsystem (24) erzeugten Zeitsignal (TIMEREF, TIMEABS) synchronisiert wird, und
- ein steuergerätinternes, bei der Durchführung der zu testenden Funktion vom Steuergerät (12) genutztes Kurbelwinkelsignal (ANGREF, ANGABS) mit dem vom Testsystem (24) erzeugten Kurbelwinkelsignal (ANGREF, ANGABS) synchronisiert wird.

5. Verfahren nach Anspruch 4, wobei der Zeitpunkt (t3) des Beginns der synchronen Verläufe der Kurbelwinkelsignale (ANGREF, ANGABS) den Beginn der synchronen Verläufe der Zeitsignale (TIMEREF, TIMEABS) definiert.

6. Testsystem (24) zum Testen von Funktionen eines daran angeschlossenen Motorsteuergeräts (12) für eine Brennkraftmaschine,
wobei das Testsystem (24) Mittel (28, 26) zur Erzeugung einer testsysteminternen Zeit-und-Winkel-Basis und zur wenigstens teilweisen Simulation einer realen Betriebsumgebung des Steuergeräts (12) umfasst,
wobei das Testsystem (24) ferner Mittel (34, 30, 32) zur Bereitstellung eines von dem Testsystem (24) simulierten Kurbelwellensignals (CRK) umfasst, aus welchem im Steuergerät (12) eine steuergerätinterne Zeit-und-Winkel-Basis erzeugbar ist,
**dadurch gekennzeichnet,**
**dass** das Testsystem (24) dazu ausgebildet ist, ein Zeitsignal (TIMEREF, TIMEABS) sowie ein Kurbelwinkelsigrial (ANGREF, ANGABS), welche der testsysteminternen Zeit-und-Winkel-Basis entsprechen, zu erzeugen und dem Steuergerät (12) bereitzustellen, wobei das Zeitsignal (TIMEREF, TIMEABS) und das Kurbelwinkelsignal (ANGREF, ANGABS) vom Steuergerät (12) nutzbar sind, um bei der Durchführung einer zu testenden Funktion eine gemeinsame Zeit-und-Winkel-Basis einerseits des Testsystems (24) und andererseits des Steuergeräts (12) sicherzustellen.

## Claims

1. Method for testing functions of a motor control device (12) for an internal combustion engine using a test system (24) connected to the control device (12),
wherein an intra-test-system time and angle basis is generated in the test system (24) and a real operating environment of the control device (12) is simulated at least partially,
wherein in the context of the simulation the control device (12) is supplied with a crankshaft signal (CRK) simulated by the test system (24), from which signal the control device (12) generates an intra-control-device time and angle basis,
**characterised in that**
using the test system (24) a time signal (TIMEREF, TIMEABS) as well as a crankshaft angle signal (ANGREF, ANGABS) are generated and supplied to the control device (12), and correspond to the intra-test-system time and angle basis, and
the time signal (TIMEREF, TIMEABS) and the crankshaft angle signal (ANGREF, ANGABS) are used by the control device (12) in order to ensure a common time and angle basis firstly of the test system (24) and secondly of the control device (12) during the performance of a function to be tested.

2. Method according to claim 1, wherein prior to testing a function a synchronisation of the intra-control-device time and angle basis with the intra-test-system time and angle basis (memory device 38) takes place.

3. Method according to claim 2, wherein the synchronisation is triggered by a synchronisation command issued by the test system (24) to the control device (12).

4. Method according to claim 2 or 3, wherein for the synchronisation of the two time and angle bases
- an intra-control-device time signal (TIMEREF, TIMEABS) used by the control device (12) during the performance of the function to be tested is synchronised with the time signal (TIMEREF, TIMEABS) generated by the test system (24), and
- an intra-control-device crankshaft angle signal (ANGREF, ANGABS) used by the control device (12) during the performance of the function to be tested is synchronised with the crankshaft angle signal (ANGREF, ANGABS) generated by the test system (24).

5. Method according to claim 4, wherein the time point (t3) of the start of the synchronous characteristics of the crankshaft angle signals (ANGREF, ANGABS) defines the start of the synchronous characteristics of the time signals (TIMEREF, TIMEABS).

6. Test system (24) for testing functions of a motor control device (12) connected thereto for an internal combustion engine,
wherein the test system (24) includes means (28, 26) for generating an intra-test-system time and angle basis and for at least the partial simulation of a real operating environment of the control device (12),
wherein the test system (24) further has means (34, 30, 32) for supplying a crankshaft signal (CRK) simulated by the test system (24), from which signal an intra-control-device time and angle basis can be generated in the control device (12),
**characterised in that**
the test system (24) is designed to generate a time signal (TIMEREF, TIMEABS) as well as a crankshaft angle signal (ANGREF, ANGABS), which correspond to the intra-test-system time and angle basis, and to supply them to the control device (12), wherein the time signal (TIMEREF, TIMEABS) and the crankshaft angle signal (ANGREF, ANGABS) can be used by the control device (12) in order to ensure a common time and angle basis firstly of the test system (24) and secondly of the control device (12) during the performance of a function to be tested.

## Revendications

1. Procédé pour tester les fonctions d'un dispositif de commande de moteur (12) pour une machine à combustion interne au moyen d'un dispositif de test (24) raccordé à ce dispositif de commande (12), au cours duquel
on engendre dans le système de test (24) une base temporelle et angulaire se trouvant au sein de celui-ci et on simule au moins partiellement un environnement de fonctionnement réel du dispositif de commande (12), et
dans le cadre de la simulation, on met à la disposition du dispositif de commande (12) un signal de vilebrequin (CRK) qui est simulé par l'intermédiaire du dispositif de test (24) et au moyen duquel le dispositif de commande (12) engendre en son sein une base temporelle et angulaire,
**caractérisé en ce qu'**
au moyen du dispositif de test (24), on engendre un signal temporel (TIMEREF, TIMEABS) ainsi qu'un signal d'angle de vilebrequin (ANGREF, ANGABS) qui sont mis à la disposition du dispositif de commande (12) et qui correspondent à la base temporelle et angulaire présente au sein du système de test, et **en ce que**
le signal temporel (TIMEREF, TIMEABS) ainsi que le signal d'angle de vilebrequin (ANGREF, ANGABS) sont utilisés par le dispositif de commande (12) afin de garantir, lors de l'exécution d'une fonction à tester, que tant le dispositif de test (24) que le dispositif de commande (12) disposent d'une base temporelle et angulaire commune.

2. Procédé selon la revendication 1, au cours duquel, avant qu'une fonction ne soit testée, il se produit une synchronisation entre la base temporelle et angulaire présente au sein du dispositif de commande et la base temporelle et angulaire présente au sein du système de test (dispositif de mémoire 38).

3. Procédé selon la revendication 2, au cours duquel la synchronisation est déclenchée au moyen d'un ordre de synchronisation émis par le système de test (24) vers le dispositif de commande (12).

4. Procédé selon la revendication 2 ou 3, au cours duquel, en vue de la synchronisation des deux bases temporelles et angulaires,
- on synchronise un signal temporel (TIMEREF, TIMEABS) présent au sein du dispositif de commande (12) et utilisé par celui-ci au cours de l'exécution de la fonction à tester, avec le signal temporel (TIMEREF, TIMEABS) engendré par le système de test (24), et
- on synchronise un signal d'angle de vilebrequin (ANGREF, ANGABS) présent au sein du dispositif de commande (12) et utilisé par celui-ci au cours de l'exécution de la fonction à tester, avec le signal d'angle de vilebrequin (ANGREF, ANGABS) engendré par le système de test (24).

5. Procédé selon la revendication 4, au cours duquel l'instant (t3) du début des allures synchrones des signaux d'angle de vilebrequin (ANGREF, ANGABS) définit le début des allures synchrones des signaux temporels (TIMREF, TIMEABS)

6. Dispositif de test (24) pour tester des fonctions d'un dispositif de commande de moteur (12) qui y est connecté pour une machine à combustion interne,
le dispositif de test (24) comprenant des moyens (28, 26) destiné à engendrer une base temporelle et angulaire au sein de ce dispositif de test et à simuler au moins partiellement un environnement réel de fonctionnement du dispositif de commande (12),
le dispositif de test (24) comprenant également des moyens (34, 30, 32) pour mettre à disposition un signal de vilebrequin (CRK) simulé par le dispositif de test (24), signal à partir duquel il est possible d'engendrer dans le dispositif de commande (12) une base temporelle et angulaire présente au sein de ce dernier,
**caractérisé en ce que**
le dispositif de test (24) est conçu de telle façon qu'il peut engendrer et mettre à disposition du dispositif de commande (12) un signal temporel (TIMEREF, TIMEABS) ainsi qu'un signal d'angle de vilebrequin (ANGREF, ANGABS) qui correspondent à la base temporelle et angulaire présente au sein du dispositif de test, le signal temporel (TIMEREF, TIMEABS) et le signal d'angle de vilebrequin (ANGREF, ANGABS) pouvant être utilisés par le dispositif de commande (12) de manière à garantir, lors de l'exécution d'une fonction à tester, que tant le dispositif de test (24) que le dispositif de commande (12) disposent d'une base temporelle et angulaire commune.
